# EUROPEAN PATENT SPECIFICATION

(11) **EP 0 695 764 B1**
(45) Date of publication and mention of the grant of the patent: **06.05.1998**
(21) Application number: 95111193.9
(22) Date of filing: 15.07.1995
(51) Int. Cl.: C08F 10/00, C08F 4/654

(54) **Improved process for the production of broad molecular weight polyethylene**
Verbessertes Verfahren zur Darstellung von Polyethylen mit breiter Molekulargewichtsverteilung
Procédé amélioré pour la production de polyéthylène ayant une distribution large de poids moléculaire

(30) Priority: 02.08.1994 EP 94870136
(43) Date of publication of application: 07.02.1996
(73) Proprietor: FINA RESEARCH S.A., B-7181 Seneffe (Feluy) (BE)
(72) Inventor: Vereecke, Dominique, B-1700 Dilbeek (BE)

(56) References cited:
- EP-A- 0 068 255
- EP-A- 0 292 134
- EP-A- 0 401 776
- EP-A- 0 459 009
- DE-A- 3 432 759
- US-A- 5 118 767

## Description

The present invention relates to a process for improving the efficiency of a supported Ziegler polymerization catalyst based on magnesium alcoholate and TiCl₄. This invention also relates to an ethylene polymerization process using this improved supported Ziegler catalyst based on magnesium alcoholate and TiCl₄.

Supported Ziegler catalysts based on magnesium alcoholate and TiCl₄ are well known in the art, and are disclosed for example in EP-A-459009, EP-A-401776, EP-A-68255, DE-A-3432759, US-A-5118767, EP-A-292134.

European Patent 401776 discloses a process for the polymerization of 1-olefins having the formula R⁴CH=CH₂ wherein R⁴ is hydrogen or an alkyl group having from 1 to 10 carbon atoms in the presence of a catalyst system comprising the reaction product of a magnesium alcoholate with titanium tetrachloride and a Group I-III organometallic compound.

European Patent 459009 discloses a solid catalyst component comprising the reaction product of diethoxymagnesium, titanium tetrachloride and phthaloyl dichloride, under specific conditions, and a catalyst for olefin polymerization comprising the abovementionned catalyst component, a specific silicon compound and a specific organoaluminium compound.

A first object of the present invention is to provide a process for improving the efficiency of supported Ziegler polymerization catalysts based on magnesium alcoholate and TiCl₄.

A further object of the present invention is to provide a process for producing polyethylene having a broader molecular weight distribution by using the improved catalysts of the present invention.

A further object of the present invention is to provide a process for producing polyethylene having a higher shear rate (SR) by using the improved catalysts of the present invention.

A further object of the present invention is to provide a process for producing polyethylene with a higher productivity by using the improved catalysts of the present invention.

The present invention provides a process for improving the efficiency of a supported Ziegler polymerization catalyst comprising a component A which is obtained by reacting a magnesium alcoholate with titanium tetrachloride characterized in that :
(a) the component A is further suspended in titanium tetrachloride and heated at a temperature comprised between 80 and 140°C
(b) the product from step (a) is filtered
(c) the product from step (b) is washed with an inert aromatic solvent
(d) the product from step (c) having a reduced titanium content is recovered.

According to the present invention there is also provided an improved process for the polymerization of ethylene in the presence of a supported Ziegler polymerization catalyst comprising a component A which is obtained by reacting a magnesium alcoholate with titanium tetrachloride and a component B which is an organometallic compound of the Groups I to III of the periodic system characterized in that the polymerization is carried out in the presence of a catalyst in which component A has been treated according to the present invention (steps (a) to (d) hereabove).

The magnesium alcoholate used can be a "simple" magnesium alcoholate of the formula Mg(OR)₂ in which R denotes identical or different alkyl radicals having 1 to 6 carbon atoms, or a "simple" magnesium alcoholate of the formula Mg(OR)ₙXₘ in which X is halogen, (SO₄)_{1/2}, (OH), (CO₃)_{1/2}, (PO₄)_{1/3} and Cl, R has the meaning mentioned hereabove and n+m is 2. It can also be a "complex" magnesium alcoholate. The term "complex" magnesium alcoholate describes a magnesium alcoholate which, as well as magnesium, contains at least one metal of the Groups I to IV of the periodic system. Such complex can be prepared by known methods such as e.g. the one disclosed in Meerwein Ann. 455 (1927), page 234 and 476 (1929), page 113; Houben Weyl, Methoden der organischen Chemie ["Methods of organic chemistry"], volume 6/2, page 30. Methods for the preparation of complex magnesium alcoholates are described in EP 401776, US 4447587 and US 4448944.

Methods for the preparation of supported Ziegler polymerization catalysts based on magnesium alcoholate and TiCl₄ particularly suitable for practising the present invention are described in EP 401776, US 4447587 and US 4448944.

The Applicant has unexpectedly found that when catalyst component A has been treated according to the present invention (steps (a) to (d) hereabove) the resulting catalyst shows an improved efficiency. Further when said treated catalyst component A is used in a catalyst for the polymerization of ethylene, it is possible to obtain polyethylene with a broader molecular weight distribution; it is also possible to obtain polyethylene showing a higher shear rate (SR; HLMI/MI₂) it is further possible to produce said polyethylene with a higher productivity.

According to the present invention the catalyst component A obtained by reacting a magnesium alcoholate with titanium tetrachloride is further suspended in titanium tetrachloride and heated at a temperature comprised between 80 and 140°C (step (a) ) and preferably at reflux. Preferably step (a) takes between 0.5 and 5 hours, more preferably between 1.5 and 3 hours.

The boiling temperature of titanium tetrachloride is 136^{o}C.

According to the present invention the resulting product is filtered (step (b) ) and washed with an inert aromatic solvent (step (c)) at a temperature comprised preferably between 40 and 140^{o}C. The preferred inert aromatic solvent is toluene.

Usually, after having treated catalyst component A according to the present invention, the recovered product has its final titanium weight content reduced by 30 to 70%.

Preferably, the treated catalyst component A contains from 0.5 to 3% by weight of titanium.

The examples which follow are given in order to provide a better illustration of the process of the present invention, but without thereby reducing its scope.

### Examples

All experiments were performed under nitrogen atmosphere.
The polymers melt index (MI₂) and high load melt index (HLMI) were determined according to ASTM D 1238-89 procedure A, MI₂ (190^{o}C, 2.16 kg), HLMI (190^{o}C, 21.6 kg)
The polymers density was determined according to ASTM D 1505-85.

### Preparation of a Ziegler catalyst component A

Magnesium ethylate (20 g, 0.175 mol) was dispersed in 300 ml of heptane, in a 1 dm³ four-necked round-bottomed flask equipped with a dropping funnel, a stirrer, a reflux condenser and a thermometer.
Titanium tetrachloride (0.438 mol) was added dropwise to this suspension at 85^{o}C, over 3 hours.
The reaction product was then washed four times with heptane (250 ml each, maintained at 60^{o}C).
The solid was dispersed again in 300 ml of heptane and stirred for 18 hours at 110^{o}C.
After filtration and drying, the catalyst so obtained has the following analytical composition (% by weight):

| | |
|---|---|
| Ti | 4.88 |
| Mg | 19.30 |
| Cl | 61.31 |

### Preparation of a modified catalyst component A (invention)

A supported Ziegler polymerization catalyst (5 g), obtained by following the procedure disclosed above, was suspended in 50 ml of TiCl₄.
The suspension was then heated for 2 hours at reflux temperature. After this treatment, the suspension was filtered while hot and the solid so obtained was washed four times with toluene maintained at 90^{o}C.
After drying under vacuum, the composition of the final product is the following (% by weight) :

| | |
|---|---|
| Ti | 2.63 |
| Mg | 21.40 |
| Cl | 67.88 |

### Example 1

### Ethylene polymerization

The polymerization was carried out in a 4 l stainless steel reactor fitted with a stirrer operating at the speed of 500 r.p.m.(revolutions per minute).

The reactor was first filled with purified n-hexane (1.5 l), hydrogen (4.7 Nl) and ethylene (4.7 bars) and the temperature was raised to 80^{o}C.

Then a mixture of the modified catalyst component A (prepared as described above) (invention) and triethylaluminum (a 10 wt% solution in hexane was used), precontacted for 2 minutes, was introduced into the reactor by means of a second amount of n-hexane (0.5 l). The amounts of reactants used are reported in table 1 (TEAL = triethyl aluminium).

The reactor was finally pressurized with ethylene up to a total pressure of 9.3 bars.

It was stirred for 1 hour, at 80^{o}C, while maintaining constant the total pressure by continuous feeding of ethylene. After the polymerization was stopped, the polyethylene fluff was collected and dried, first under a nitrogen stream then under vacuum at 50^{o}C.
Yield and properties are specified in table 1.

### Example 2

### Ethylene polymerization

Same procedure was followed as in example 1 except that 7 Nl hydrogen was introduced into the reactor. The polymerization was carried out under a total pressure of 10.3 bars.
Polyethylene fluff was collected in the amount and with properties as specified in table 1.

### Comparative examples 1 - 2

### Ethylene polymerization

Same procedure was followed as in examples 1, 2 except that the Ziegler catalyst component A used was obtained without modifications following the procedure disclosed above.
Polyethylene fluffs were collected in the amount and with properties as specified in table 1.

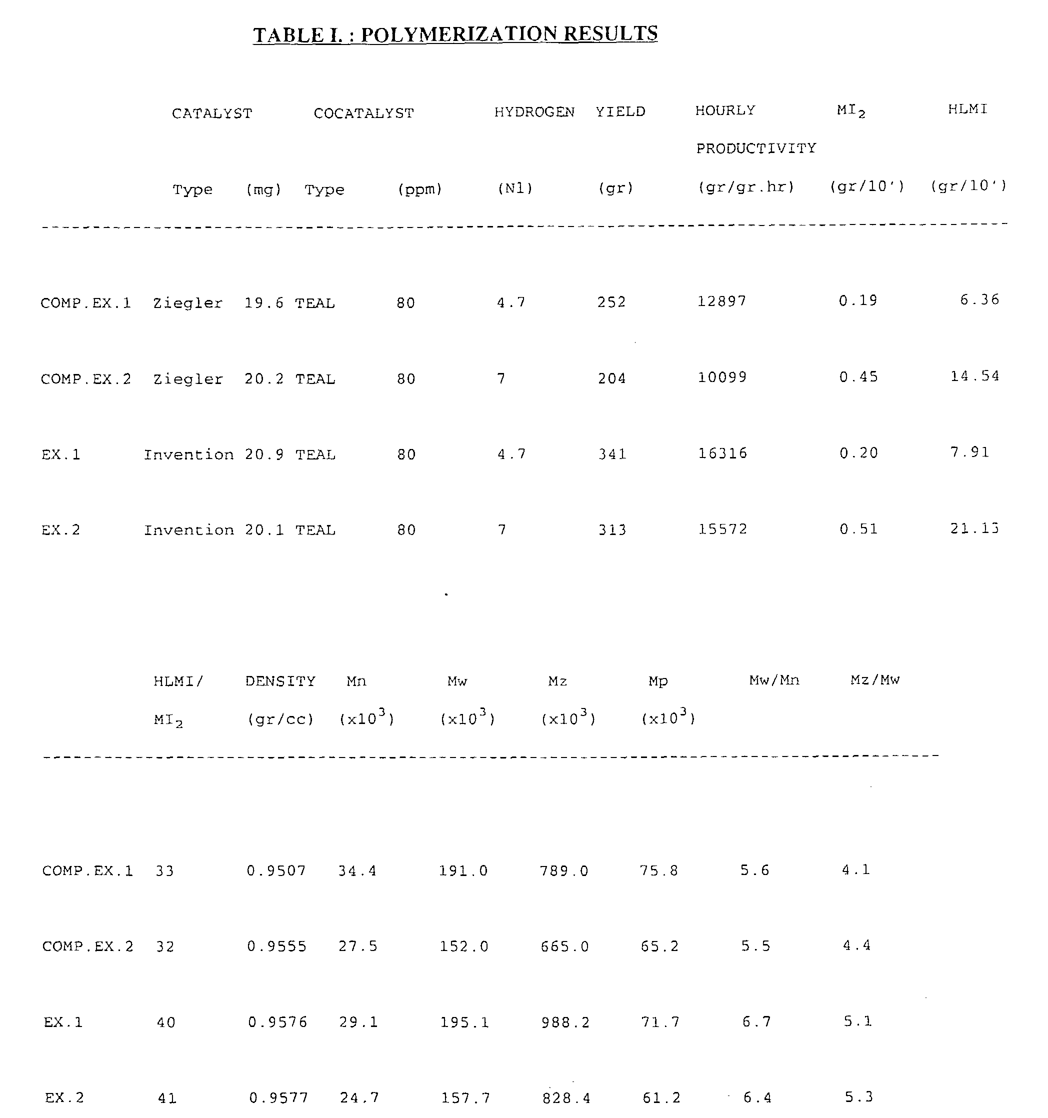

## Claims

1. Process for the polymerization of ethylene in the presence of a supported Ziegler polymerization catalyst comprising the following steps :
(i) preparing a product by reacting a magnesium alcoholate with titanium tetrachloride;
(ii) suspending the product obtained in step (i) in titanium tetrachloride and heating it a a temperature comprised between 80 and 140°C;
(iii)after the heating, filtering of the product obtained in step (ii);
(iv) washing the product obtained in step (iii) with an inert aromatic solvent;
(v) recovering the product having a reduced titanium content from step (iv) : this product is called component A;
(vi) polymerizing ethylene in the presence of a supported Ziegler polymerization catalyst comprising said component A and a component B which is an organometallic compound of the Groups I to III of the periodic system.

2. Process according to claim 1, wherein in step (ii) the product obtained in step (i) is suspended in titanium tetrachloride and heated at reflux.

3. Process according to any of the preceding claims, wherein step (ii) takes between 0.5 and 5 hours.

4. Process according to claim 3, wherein step (ii) takes between 1.5 and 3 hours.

5. Process according to any of the preceding claims wherein the inert aromatic solvent used in step (iv) is toluene.

6. Process according to any of the preceding claims wherein the product recovered at step (v) (component A) contains from 0.5 to 3% by weight of titanium.

## Patentansprüche

1. Verfahren für die Polymerisation von Ethylen in Gegenwart eines geträgerten Ziegler-Polymerisationskatalysators, beinhaltend die folgenden Schritte:
(i) Herstellen eines Produkts durch Reaktion eines Magnesiumalkoholats mit Titantetrachlorid;
(ii) Suspendieren des in dem Schritt (i) erzielten Produkts in Titantetrachlorid und Erwärmen desselben auf eine Temperatur, die zwischen 80 und 140 °C liegt;
(iii) nach dem Erwärmen, Filtrieren des in dem Schritt (ii) erzielten Produkts;
(iv) Waschen des in dem Schritt (iii) erzielten Produkts mit einem inerten aromatischen Lösungsmittel;
(v) Rückgewinnen des Produkts, das einen reduzierten Titangehalt hat, aus dem Schritt (iv) : dieses Produkt wird als Komponente A bezeichnet;
(vi) Polymerisieren von Ethylen in Gegenwart eines geträgerten Ziegler-Polymerisationskatalysators, der die Komponente A und eine Komponente B umfaßt, bei der es sich um eine organometallische Verbindung der Gruppen I bis III des periodischen Systems handelt.

2. Verfahren nach Anspruch 1, wobei in dem Schritt (ii) das in dem Schritt (i) erzielte Produkt in Titantetrachlorid suspendiert und im Rückfluß erwärmt wird.

3. Verfahren nach einem der vorhergehenden Ansprüche, wobei der Schritt (ii) zwischen 0,5 und 5 Stunden dauert.

4. Verfahren nach Anspruch 3, wobei der Schritt (ii) zwischen 1,5 und 3 Stunden dauert.

5. Verfahren nach einem der vorhergehenden Ansprüche, wobei das inerte aromatische Lösungsmittel, das in dem Schritt (iv) benutzt wird, Toluol ist.

6. Verfahren nach einem der vorhergehenden Ansprüche, wobei das Produkt, das in dem Schritt (v) (Komponente A) rückgewonnen wird, 0,5 bis 3 Gew.-% Titan enthält.

## Revendications

1. Procédé pour la polymérisation d'éthylène en présence d'un catalyseur de polymérisation de Ziegler déposé sur un support, comprenant les étapes ci-après:
(i) préparer un produit en faisant réagir un alcoolate de magnésium avec du tétrachlorure de titane;
(ii) mettre le produit obtenu à l'étape (i) en suspension dans du tétrachlorure de titane et le chauffer à une température comprise entre 80 et 140°C;
(iii)après le chauffage, filtrer le produit obtenu à l'étape (ii);
(iv) laver, avec un solvant aromatique inerte, le produit obtenu à l'étape (iii);
(v) récupérer le produit de l'étape (iv) possédant une teneur réduite en titane: ce produit est appelé "composant A";
(vi) polymériser de l'éthylène en présence d'un catalyseur de polymérisation de Ziegler déposé sur un support comprenant ledit composant A et un composant B, à savoir un composé organométallique des groupes I à III du tableau périodique.

2. Procédé selon la revendication 1, dans lequel, dans l'étape (ii), on met le produit obtenu à l'étape (i) en suspension dans du tétrachlorure de titane et on le chauffe au reflux.

3. Procédé selon l'une quelconque des revendications précédentes, dans lequel l'étape (ii) prend entre 0,5 et 5 heures.

4. Procédé selon la revendication 3, dans lequel l'étape (ii) prend entre 1,5 et 3 heures.

5. Procédé selon l'une quelconque des revendications précédentes, dans lequel le solvant aromatique inerte utilisé à l'étape (iv) est le toluène.

6. Procédé selon l'une quelconque des revendications précédentes, dans lequel le produit récupéré à l'étape (v) (composant A) contient du titane à concurrence de 0,5 à 3% en poids.
